# EUROPEAN PATENT SPECIFICATION

(11) **EP 1 193 285 B1**
(45) Date of publication and mention of the grant of the patent: **25.05.2005**
(21) Application number: 01121723.9
(22) Date of filing: 18.09.2001
(51) Int. Cl.: C08J 7/06, G02B 1/10

(54) **Method for producing coating composition for lenses for spectacles**
Verfahren zur Herstellung einer Beschichtungszusammensetzung für Brillengläser
Procédé pour la fabrication d'une composition de revêtement pour lentilles de lunettes

(30) Priority: 29.09.2000 JP 2000300143
(43) Date of publication of application: 03.04.2002
(73) Proprietor: HOYA CORPORATION, Shinjuku-ku, Tokyo 161-8525 (JP)
(72) Inventor: Watanabe, Jun, Shinjyuku-ku, Tokyo 161-8525 (JP); Itoh, Takanobu, Shinjyuku-ku, Tokyo 161-8525 (JP)
(74) Representative: Lederer, Franz, Dr.

(56) References cited:
- EP-A- 0 525 215
- EP-A- 0 530 757

## Description

The present invention relates to a method for producing a coating composition for lenses for spectacles, in which the coating composition produced has excellent storage stability.

### [Prior Art]

For making plastic articles having scratch resistance and aesthetic appearance, it was known to form a cured film made of a coating composition on their surfaces. As curing catalyst for the coating composition, for example, Japanese Patent Publication No. 33868/1986 discloses amine compounds, and Japanese Patent Publication No. 11727/1985 discloses aluminum or iron acetylacetonates. A coating film for optical elements prepared from an acetylacetonate metal salt, an aliphatic amine, metal oxide colloid particles and an organosilicon compound are known from EP 0 525 215.

However, the acetylacetonates are problematic in point of the pot life of coating compositions containing them, though their ability to cure coating compositions is excellent. Since coating compositions are extremely expensive, improving their storage stability (that is, prolonging their pot life) is profitable for reducing their production costs. In addition, coating compositions of improved storage stability are preferred in producing lenses coated with them, since the frequency of exchanging them in the process of producing coated lenses can be reduced, thereby ensuring continuous production of good adhesiveness between lens substrates and cured films thereon.

### [Problems that the Invention is to Solve]

Given that situation, the present invention is to overcome the problems with the prior art as above and to provide a method for producing a coating composition for lenses for spectacles, of which the advantages are that the method is simple, the cost of the coating composition produced therein is reduced, the physical properties of the cured film of the coating composition do not worsen in time, and the coating composition has excellent storage stability.

### [Means for Solving the Problems]

We, the present inventors have assiduously studied so as to develop a method for producing a coating composition of excellent storage stability for lenses for spectacles, and, as a result, have found that, when a specific storage stabilizer and a specific curing agent are combined in producing a coating composition, then the object can be attained. On the basis of this finding, we have completed the present invention.

Specifically, the invention provides the following:
(1) A method for producing a coating composition for lenses for spectacles, which comprises adding (C) an acetylacetonate metal salt and (D) an aliphatic amine to a liquid mixture that contains (A) metal oxide colloid particles and (B) an organosilicon compound after the mixture has been hydrolyzed.
(2) A coating composition for lenses for spectacles, which is obtained according to the production method of above (1);
(3) A method for producing lenses for spectacles having a cured film, which comprises applying the coating composition of above (2) onto the surface of a plastic lens substrate, followed by curing it; and
(4) A lens for spectacles, which is obtained according to the production method of above (3).

### [Mode for Carrying out the Invention]

The method of the invention for producing a coating composition of lenses for spectacles according to the invention comprises adding (C) an acetylacetonate metal salt that serves as a curing agent and (D) an aliphatic amine which is for prolonging the pot life of the coating composition produced, to a liquid mixture that contains (A) metal oxide colloid particles and (B) an organosilicon compound after the mixture has been hydrolyzed.

The metal oxide colloid particles (A) in the coating composition are not specifically limited, and may be arbitrarily selected from any known ones. Examples of the metal oxide colloid particles are fine particles of single metal oxides such as aluminum oxide, titanium oxide, antimony oxide, tin oxide, zirconium oxide, silicon oxide, cerium oxide, iron oxide; as well as fine particles of composite oxides, for example, fine particles of a composite, tin oxide-zirconium oxide-tungsten oxide disclosed in Japanese Patent Laid-Open No. 25603/1994; fine particles of a composite, tin oxide-tungsten oxide disclosed in Japanese Patent Laid-Open No. 217230/1991; fine particles of a composite metal oxide of titanium oxide, cerium oxide and silicon oxide disclosed in Japanese Patent Laid-Open No. 113760/1996; fine particles of a composite, titanium oxide-zirconium oxide-tin oxide disclosed in Japanese Patent Laid-Open No. 306258/1998; fine particles of a composite, titanium oxide-zirconium oxide-silicon oxide, and those of a composite, stannic oxide-zirconium oxide-tungsten oxide disclosed in Japanese Patent Laid-Open No. 21901/1997. The mean particle size of the metal oxide colloid particles may fall generally between 1 and 500 nm. One or more the same or different types of metal oxide colloid particles may be used either singly or as combined for the component (A).

The amount of the component (A) in the composition may fall between 1 and 500 parts by weight, preferably between 10 and 200 parts by weight, and even more preferably between 50 and 150 parts by weight, relative to 100 parts by weight of the organosilicon compound (B) therein.

The organosilicon compound (B) may be, for example, at least one selected from compounds of the general formula (I):

(R¹)ₐ(R³)_{b}Si(OR²)_{4-(a+b)} (I)

wherein R¹ and R³ each independently represent a monovalent hydrocarbon group having from 1 to 10 carbon atoms and having or not having a functional group; R² represents an alkyl group having from 1 to 8 carbon atoms, an aryl group having from 6 to 10 carbon atoms, an aralkyl group having from 7 to 10 carbon atoms, or an acyl group having from 1 to 8 carbon atoms; a and b each indicate 0 or 1; and (OR²)'s may be the same or different;
and compounds of the general formula (II):

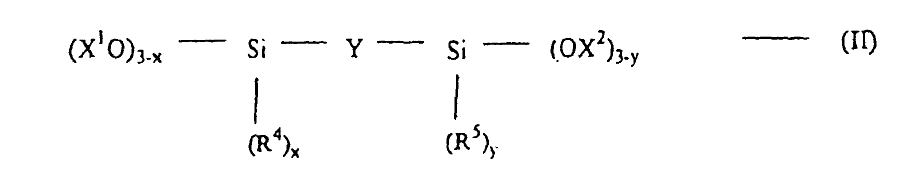

In the formula, R⁴ and R⁵ each independently represent a monovalent hydrocarbon group having from 1 to 5 carbon atoms and having or not having a functional group; X¹ and X² each independently represent an alkyl group having from 1 to 4 carbon atoms, or an acyl group having from 1 to 4 carbon atoms; Y represents a divalent hydrocarbon group having from 1 to 20 carbon atoms; x and y each indicate 0 or 1; X¹'s may be the same or different; and X²'s may be the same or different.

In formula (I), the monovalent hydrocarbon group having from 1 to 10 carbon atoms for R¹ and R³ includes an alkyl group having from 1 to 10 carbon atoms, an alkenyl group having from 2 to 10 carbon atoms, an aryl group having from 6 to 10 carbon atoms, and an aralkyl group having from 7 to 10 carbon atoms. The alkyl and alkenyl groups may be linear, branched or cyclic. Examples of the alkyl group having from 1 to 10 carbon atoms are a methyl group, an ethyl group, an n-propyl group, an isopropyl group, an n-butyl group, an isobutyl group, a sec-butyl group, a tert-butyl group, a pentyl group, a hexyl group, an octyl group, a cyclopentyl group, a cyclohexyl group. Examples of the alkenyl group having from 2 to 10 carbon atoms are a vinyl group, an allyl group, a butenyl group, a hexenyl group, an octenyl group. Examples of the aryl group having from 6 to 10 carbon atoms are a phenyl group, a tolyl group, a xylyl group, a naphthyl group . Examples of the aralkyl group having from 7 to 10 carbon atoms are a benzyl group, a phenethyl group, a naphthylmethyl group . These hydrocarbon groups may have a functional group introduced thereinto. The functional group includes, for example, a halogen atom, a glycidoxy group, an epoxy group, an amino group, a cyano group, a mercapto group, a (meth)acryloxy group. Examples of the monovalent hydrocarbon group having from 1 to 10 carbon atoms and having such a functional group are a glycidoxymethyl group, an α-glycidoxyethyl group, a β-glycidoxyethyl group, an α-glycidoxypropyl group, a β-glycidoxypropyl group, a γ-glycidoxypropyl group, an α-glycidoxybutyl group, a β-glycidoxybutyl group, a γ-glycidoxybutyl group, a δ-glycidoxybutyl group, a (3,4-epoxycyclohexyl)methyl group, a β-(3,4-epoxycyclohexyl)ethyl group, a γ-(3,4-epoxycyclohexyl)propyl group, a δ-(3,4-epoxycyclohexyl)butyl group, a chloromethyl group, a γ-chloropropyl group, a 3,3,3-trifluoropropyl group, a γ-methacryloxypropyl group, a γ-acryloxypropyl group, a γ-mercaptopropyl group, a β-cyanoethyl group, an N-(β-aminoethyl)-γ-aminopropyl group, a γ-aminopropyl group.

On the other hand, the alkyl group having from 1 to 8 carbon atoms for R² may be linear, branched or cyclic. Its examples are a methyl group, an ethyl group, an n-propyl group, an isopropyl group, an n-butyl group, an isobutyl group, a sec-butyl group, a tert-butyl group, a pentyl group, a hexyl group, a cyclopentyl group, a cyclohexyl group. Examples of the aryl group having from 6 to 10 carbon atoms for R² are a phenyl group, a tolyl group, a xylyl group; and examples of the aralkyl group having from 7 to 10 carbon atoms for R² are a benzyl group, a phenethyl group. The acyl group having from 1 to 8 carbon atoms for R² includes, for example, an acetyl group a and b each indicate 0 or 1; and (OR²)'s may be the same or different.

Examples of the compound of the general formula (I) are methyl silicate, ethyl silicate, n-propyl silicate, isopropyl silicate, n-butyl silicate, sec-butyl silicate, tert-butyl silicate, tetraacetoxysilane, methyltrimethoxysilane, methyltripropoxysilane, methyltriacetoxysilane, methyltributoxysilane, methyltriamyloxysilane, methyltriphenoxysilane, methyltribenzyloxysilane, methyltriphenethyloxysilane, glycidoxymethyltriethoxysilane, glycidoxymethyltrimethoxysilane, α-glycidoxyethyltrimethoxysilane, α-glycidoxyethyltriethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltriethoxysilane, (3,4-epoxycyclohexyl)methyltrimethoxysilane, β-(3,4-epoxycyclohexyl)ethyltriethoxysilane, β-(3,4-epoxycyclohexyl)ethyltrimethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysitane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, α-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysitane, γ-glycidoxypropylvinyldiethoxysilane, γ-glycidoxypropylphenyldimethoxysilane, γ-glycidoxypropylphenyldiethoxysilane, ethyltrimethoxysilane, ethyltriethoxysilane, vinyltrimethoxysilane, vinyltriacetoxysilane, vinyltriethoxysilane, phenyltrimethoxysilane, phenyltriethoxysilane, phenyltriacetoxysilane, γ-chloropropyltrimethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldiethoxysilane, γ-chloropropylmethyldimethoxysilane, dimethyldiacetoxysilane, γ-methacryloxypropylmethyldimethoxysilane, γ-methacryloxypropylmethytdiethoxysilane, γ-mercaptopropylmethyldimethoxysilane, γ-mercaptopropylmethyldiethoxysilane, methylvinyldimethoxysilane, methylvinyldiethoxysilane.

On the other hand, in the general formula (II), the alkyl group having from 1 to 4 carbon atoms for X¹ and X² includes a methyl group, an ethyl group, an n-propyl group, an isopropyl group, an n-butyl group, an isobutyl group, a sec-butyl group, a tert-butyl group; and the acyl group having from 1 to 4 carbon atoms is, for example, preferably an acetyl group. These X¹ and X² may be the same or different. The monovalent hydrocarbon group having from 1 to 5 carbon atoms for R⁴ and R⁵ includes an alkyl group having from 1 to 5 carbon atoms, and an alkenyl group having from 2 to 5 carbon atoms. These may be linear, branched or cyclic. Examples of the alkyl group are a methyl group, an ethyl group, an n-propyl group, an isopropyl group, an n-butyl group, a sec-butyl group, a tert-butyl group, a pentyl group. Examples of the alkenyl group are a vinyl group, an allyl group, a butenyl group. These hydrocarbon groups may have a functional group introduced thereinto. For the functional group and the functional group-having hydrocarbon group, referred to are the same as those mentioned hereinabove for R¹ and R³ in the general formula (I). These R⁴ and R⁵ may be the same or different. For the divalent hydrocarbon group having from 1 to 20 carbon atoms for Y, preferred are an alkylene group and an alkylidene group, including, for example, a methylene group, an ethylene group, a propylene group, a butylene group, a pentylene group, a hexylene group, an octylene group, an ethylidene group, a propylidene group, x and y each indicate 0 or 1; (OX¹)'s may be the same or different; and (OX²)'s may be the same or different.

Examples of the compound of the general formula (II) are methylenebis(methyldimethoxysilane), ethylenebis(ethyldimethoxysilane), propylenebis(ethyldiethoxysilane), butylenebis(methyldiethoxysilane).

In the coating composition of the invention, the organosilicon compound (B) may be one selected from the compounds of the general formulae (I) and (II), or may be a combination of two or more selected from them. The hydrolyzates may be prepared by adding an aqueous basic solution such as an aqueous solution of sodium hydroxide, or ammonia, or an aqueous acidic solution such as an aqueous solution of hydrochloric acid, acetic acid, or citric acid to a compound of the general formula (I) or (II), followed by stirring it.

In the coating composition of the invention, the acetylacetonate metal salt (C) serves as a curing agent. The acetylacetonate metal salt may be a metal complex represented by:

M¹(CH₃COCHCOCH₃)ₙ₁(OR⁶)ₙ₂

wherein M' represents Zn(II), Ti(IV), Co(II), Fe(II), Cr(III), Mn(II), V(III), V(IV), Ca(II), Co(III), Cu(II), Mg(II), or Ni(II); R⁶ represents a hydrocarbon group having from 1 to 8 carbon atoms; n1 + n2 is a number corresponding to the valence of M, and is 2, 3 or 4; and n2 is 0, 1 or 2. For R⁶ in this, referred to are those having from 1 to 8 carbon atoms of the hydrocarbon group having from 1 to 10 mentioned hereinabove for the substituents in the general formula (I).

Preferably, the amount of the acetylacetonate metal salt (C) to be in the coating composition falls between 0.001 and 50 parts by weight, and more preferably between 0.1 and 10 parts by weight, relative to 100 parts by weight of the organosilicon compound (B) therein. If the amount of the component (C) therein is smaller than 0.001 part by weight, the coating composition may possibly cure insufficiently; but if larger than 50 parts by weight, the physical properties of the cured film of the composition may possibly be poor.

In the invention, the aliphatic amine (D) serves as a pot life-prolonging agent for prolonging the pot life of the coating composition containing the components (A), (B) and (C). The component (D) is known as a curing agent for coating compositions, but no one knows that it has the function of prolonging the pot life of coating compositions. The aliphatic amine includes, for example, those of the following formula:

NR⁷R⁸R⁹

wherein N is a nitrogen atom; and R⁷, R⁸ and R⁹ each are a hydrogen atom or an aliphatic group. Concretely, for example, it includes allylamine, diallylamine, i-propylamine, propylamine, butylamine, i-butylamine, t-butylamine, sec-butylamine, methylamine, ethylamine, diethylamine, dibutylamine, diisobutylamine, diisopropylamine, tri-n-octylamine, ethoxypropylamine, methoxypropylamine.

Preferably, the amount of the component (D) to be in the composition falls between 0.001 and 10 parts by weight, and more preferably between 0.01 and 10 parts by weight, relative to 100 parts by weight of the organosilicon compound (B) therein. If it is smaller than 0.001 part by weight, the storage stability of the coating composition could not be improved; but if larger than 10 parts by weight, the physical properties of the cured film of the composition may possibly be poor.

In the production method of the invention, the components (A) and (B) are mixed.

After the components (A) and (B) have been mixed and hydrolyzed, the component (C) and the component (D) are added thereto. In that order, the coating composition produced can have a longer pot life, and, in addition, its adhesiveness to lens substrates is enhanced and the lenses coated with it have excellent scratch resistance.

If desired, various organic solvents and surfactants may be added to the coating composition of the invention for further improving the wettability of the composition applied to substrates and for further improving the smoothness of the cured film of the composition. Also, if desired, any of UV absorbents, antioxidants, light stabilizers and anti-aging agents may also be added thereto, not having any negative influence on the properties of the coating composition itself and also on the properties of the cured film of the composition.

The plastic lens substrate for the lenses for spectacles of the invention includes, for example, methyl methacrylate homopolymers, copolymers of methyl methacrylate with at least one other monomers, diethylene glycol bisallylcarbonate homopolymers, copolymers of diethylene glycol bisallylcarbonate with at least one other monomers, sulfur-containing copolymers, halogen-containing copolymers, polycarbonates, polystyrenes, polyvinyl chlorides, unsaturated polyesters, polyethylene terephthalates, polyurethanes, polythiourethanes.

The lens of the invention for spectacles is produced by applying a coating composition of the invention as above onto the surface of a plastic lens substrate as above, followed by curing it to form a cured film thereon. The cured film of the coating composition of the invention firmly adheres to the plastic lens substrate coated therewith, even though the substrate is not subjected to physical or chemical treatment in advance. Needless to say, the lens substrate to be coated with the coating composition of the invention may be previously subjected to any conventional pretreatment for film adhesiveness improvement, for example, to chemical treatment with any of acids, alkalis and various organic solvents, to physical treatment with plasma, UV rays or the like, to washing treatment with various detergents, to sand blast treatment, or to primer treatment with various resins, whereby the adhesiveness between the lens substrate and the cured film formed thereon can be further enhanced.

For applying the coating composition onto the surface of a plastic lens substrate, employable is any ordinary method of dip coating, spin coating, or spraying. In view of the face accuracy of the coated film, especially preferred is dip coating or spin coating. Having been applied to lens substrates, the composition is cured by drying it in hot air or by exposing it to active energy rays. Preferably, it is cured in hot air at 70 to 200°C, and more preferably at 90 to 150°C. For the active energy rays, preferred are far-infrared rays as not damaging the film by heat.

### [Examples]

The invention is described in more detail with reference to the following Examples, which, however, are not intended to restrict the scope of the invention.

### Production Example:

### Production of aqueous methanol sol of modified stannic oxide-zirconium silicon oxide composite

### <Preparation of aqueous sol of stannic oxide>

An aqueous sol of stannic oxide was prepared through reaction of tin powder, aqueous hydrochloric acid and aqueous hydrogen peroxide. This was pale yellow and transparent. Its specific gravity was 1.420; its pH was 0.40; its viscosity immediately after stirred was 32 mPa·s; its SnO₂ content was 33.0 % by weight; its HCI content was 2.56 % by weight; the particle size of its fusiform colloidal particles measured through electron microscopy was at most 10 nm; the specific surface area thereof measured according to the BET method was 120 m²/g; the particle size thereof converted from the specific surface area was 7.2 nm; and the particle size thereof measured according to the dynamic light-scattering method by the use of a US Coulter's N₄ device was 107 nm. 1200 g of the pale yellow, transparent aqueous sol of stannic dioxide was dispersed in 10800 g of water, to which was added 4.8 g of isopropylamine. Then, the resulting mixture was passed through a column filled with an OH-type anion-exchange resin to obtain 13440 g of an alkaline aqueous sol of stannic oxide. The sol was stable and colloidal, but was extremely highly transparent. Its specific gravity was 1.029; its pH was 9.80; its viscosity was 1.4 mPa·s; its SnO₂ content was 2.95 % by weight; and its isopropylamine content was 0.036 % by weight.

### Step (a):

A chemical reagent, zirconium oxychloride (ZrOCl₂·8H₂O) was dissolved in water to prepare an aqueous zirconium oxychloride solution (having a concentration of 2.0 % by weight in terms of ZrO₂). While 3043 g of the aqueous solution (containing 60.87 g of ZrO₂) was stirred at room temperature, 10791 g of the aqueous alkaline sol of stannic oxide prepared in the above (containing 409.5 g of SnO₂) was added thereto, and stirred further for 2 hours. The mixture was a colloidal transparent sol having a ratio by weight of ZrO₂/SnO₂ of 0.15 and a pH of 1.50.

### Step (b) (for preparation of stannic oxide-zirconium oxide composite sol):

The mixture prepared in the step (a) was heated at 90°C for 5 hours with stirring to obtain 13834 g of a sol of stannic oxide-zirconium oxide composite. The sol contained 2.96 % by weight of SnO₂, 0.44 % by weight of ZrO₂ and 3.40 % by weight of (SnO₂ + ZrO₂); and its pH was 1.45, and its particle size was 9.0 nm. It was colloidal, but its transparent was good.

### Step (c) (for preparation of tungsten oxide-stannic oxide-silicon dioxide composite sol):

113 g of No. 3 diatom (containing 29.0 % by weight of SiO₂) was dissolved in 2353.7 g of water, and then 33.3 g of sodium tungstate, Na₂WO₄·2H₂O (containing 71 % by weight of WO₃) and 42.45 g of sodium stannate, NaSnO₃·H₂O (containing 55 % by weight of SnO₂) were dissolved therein. Next, this was passed through an H-type cation-exchange resin column to obtain 3150 g of an acidic sol of tungsten oxide-stannic oxide-silicon dioxide composite. Its pH was 2.1; its WO₃ content was 0.75 % by weight; its SnO₂ content was 0.75 % by weight; its SiO₂ content was 1.00 % by weight; the ratio by weight of WO₃/SnO₂ therein was 1.0; the ratio by weight of SiO₂/SnO₂ therein was 1.33; and its particle size was 2.5 nm.

### Step (d):

While 3150 g of the tungsten oxide-stannic oxide-silicon dioxide composite sol prepared in the step (c) (containing 78.83 g in total of WO₃ + SnO₂ + SiO₂) was stirred at room temperature, 11592.6 g of the stannic oxide-zirconium oxide composite sol prepared in the step (c) (containing 394.1 g in total of ZrO₂ + SnO₂) was added thereto over a period of 20 minutes, and then stirred further for 30 minutes. In the resulting mixture, the ratio by weight of tungsten oxide-stannic oxide-silicon dioxide composite colloid (WO₃ + SnO₂ + SiO₂) to stannic oxide-zirconium oxide composite colloid (ZrO₂ + SnO₂), (WO₃ + SnO₂ + SiO₂)/(ZrO₂ + SnO₂) was 0.20; the pH of the mixture was 2.26; the overall metal oxide content thereof was 3.2 % by weight; and the mixture looked cloudy as the colloidal particles therein were micro-aggregated.

### Step (e) (for completion of modified stannic oxide-zirconium oxide composite sol):

To 14742.6 g of the mixture obtained in the step (d), added was 9.5 g of diisobutylamine. This was passed through a column filled with an OH-type anion-exchange resin (Amberlite 410) at room temperature, and then aged under heat at 80°C for 1 hour to obtain 16288 g of an aqueous sol of modified stannic oxide-zirconium oxide composite (dilute liquid). The overall metal oxide content of the sol was 2.90 % by weight; the pH thereof was 10.43; and the sol was colloidal, but its transparent was good.

The aqueous sol of modified stannic oxide-zirconium oxide composite (dilute liquid) obtained in the step (e) was concentrated by filtering it through an ultrafilter (fractionation molecular weight: 50,000) at room temperature to obtain 2182 g of a high-concentration aqueous sol of modified stannic oxide-zirconium oxide composite. The sol had a pH of 8.71 and an overall metal oxide content (ZrO₂ + SnO₂ + WO₃ + SiO₂) of 18.3 % by weight, and was stable.

While 2182 g of the high-concentration aqueous sol of modified stannic oxide-zirconium oxide composite was stirred at room temperature, 4.0 g of tartaric acid, 6.0 g of diisobutylamine and one drop of a defoaming agent (SN Defoamer 483 made by San Nopco Limited) were added thereto, and stirred for 1 hour. The resulting sol was put into a flask equipped with a stirrer, and water was evaporated away from it under atmospheric pressure, while gradually adding 20 liters of methanol thereto, whereby water in the sol was substituted with methanol. As a result, 1171 g of a methanol sol of modified stannic oxide-zirconium oxide composite was obtained. Its specific gravity was 1.124; its pH was 7.45 (in the form of 1/1 by weight mixture with water); its viscosity was 2.3 mPa·s; its overall metal oxide content (ZrO₂ + SnO₂ + WO₃ + SiO₂) was 32.7 % by weight; its water content was 0.47 % by weight; and its particle size measured through electron microscopy was from 10 to 15 nm.

The sol was colloidal and was highly transparent. Even after stored at room temperature for 3 months, it was still good and stable, not forming deposits and not becoming cloudy and thickened. The dried product of the sol had a refractive index of 1.76.

### Example 1:

### (1) Preparation of Coating Composition:

Under an atmosphere at 5°C, 15 parts by weight of γ-glycidoxypropyltrimethoxysilane (component (B)) and 49 parts by weight of the methanol sol of modified stannic oxide-zirconium silicon oxide composite as prepared in the Production Example (component (A)) were mixed, and stirred for 1 hour. Next, 3.5 parts by weight of 0.001 N hydrochloric acid was added thereto, and stirred for 50 hours.

Next, 30 parts by weight of a solvent, propylene glycol monomethyl ether (PGM), 0.6 parts by weight of aluminum trisacetylacetonate (AL-AA) (component (C)), and 0.01 part by weight of diisobutylamine (component (D)) were added thereto in that order, and stirred for 80 hours. The resulting solution was filtered through a 0.5 µm filter, and this is a coating composition of the invention.

### (2) Pre-treatment of Substrate:

A lens substrate (EYAS® having a refractive index of 1.60, made by Hoya Corporation) was dipped in an aqueous sodium hydroxide solution at 60°C for 180 seconds, with 28 kHz ultrasonic waves being applied thereto, and then washed with ion-exchanged water for 180 seconds, still with 28 kHz ultrasonic waves being applied thereto. Finally, this was dried at 70°C. This process is for pre-treating the substrate.

### (3) Formation of Cured Film:

The pre-treated lens substrate EYAS® was dipped in the coating composition for 30 seconds, and then pulled up at a rate of 30 cm/min. With that, this was cured at 120°C for 60 minutes to form a cured film on the substrate.

### Example 2:

A coating composition was prepared in the same manner as in Example 1, except that i-propylamine was used herein in place of diisobutylamine. Also, in the same manner, a cured film of the composition was formed on a lens substrate EYAS®.

### Example 3:

A coating composition was prepared in the same manner as in Example 1, except that γ-methacryloyloxypropyltrimethoxysilane was used herein in place of γ-glycidoxypropyltrimethoxysilane. Also, in the same manner, a cured film of the composition was formed on a lens substrate EYAS®.

### Example 4:

A coating composition was prepared in the same manner as in Example 1, except that γ-methacryloyloxypropyltrimethoxysilane was used herein in place of γ-glycidoxypropyltrimethoxysilane and that i-propylamine was used herein in place of diisobutylamine. Also, in the same manner, a cured film of the composition was formed on a lens substrate EYAS®.

### Example 5:

A coating composition prepared in the same manner as in Example 1 was applied onto a lens substrate of diethylene glycol bisallyl carbonate and not onto EYAS®, and processed in the same manner as in Example 1, to thereby form a cured film of the composition thereon.

### Example 6:

A coating composition was prepared in the same manner as in Example 1, except that a dispersion of stannic oxide-tungsten oxide-zirconium oxide composite colloid particles in methanol, which is described in Japanese Patent Laid-Open No. 25603/1994, was used herein in place of the sol used in Example 1. Also, in the same manner, a cured film of the composition was formed on a lens substrate EYAS®.

### Comparative Example 1:

A coating composition was prepared in the same manner as in Example 1, except that diisobutylamine was not used herein. Also, in the same manner, a cured film of the composition was formed on a lens substrate EYAS®.

### Comparative Example 2:

A coating composition was prepared in the same manner as in Example 3, except that diisobutylamine was not used herein. Also, in the same manner, a cured film of the composition was formed on a lens substrate ERAS®.

### Comparative Example 3:

A coating composition was prepared in the same manner as in Example 5, except that diisobutylamine was not used herein. Also, in the same manner, a cured film of the composition was formed on a lens substrate EYAS®.

### Comparative Example 4:

A coating composition was prepared in the same manner as in Example 6, except that diisobutylamine was not used herein. Also, in the same manner, a cured film of the composition was formed on a lens substrate EYAS®.

### Comparative Example 5:

A coating composition was prepared in the same manner as in Example 1, except that the curing agent AL-AA was not used herein. Also, in the same manner, a cured film of the composition was formed on a lens substrate EYAS®.

### Comparative Example 6:

: A coating composition was prepared in the same manner as in Example 1, except that 0.01 part by weight of diisobutylamine (component (D)) was added to γ-glycidoxypropyltrimethoxysilane (component (B)) and thereafter the methanol sol of modified stannic oxide-zirconium silicon oxide composite (component (A)) was added thereto. Also, in the same manner, a cured film of the composition was formed on a lens substrate EYAS®.

### Comparative Example 7:

A coating composition was prepared in the same manner as in Example 1, except that diisobutylamine (component (D)) was added to γ-glycidoxypropyltrimethoxysilane (component (B)), then the sol of component (A) was added thereto, and thereafter, the resulting mixture was hydrolyzed with hydrochloric acid. Also, in the same manner, a cured film of the composition was formed on a lens substrate EYAS®. In this, the amounts of the components used were the same as those in Example 1.

### Comparative Example 8:

A coating composition was prepared in the same manner as in Example 1, except that 0.01 part by weight of diisobutylamine (component (D)) was added to the sol of component (A). Also, in the same manner, a cured film of the composition was formed on a lens substrate EYAS®.

### <Method for Evaluation of Storage Stability>

The storage stability of coating compositions is considered to be an extension of the adhesion stability of the cured films of the compositions on lens substrates. To that effect, a thermal load was applied to the coating compositions to be tested by storing them at 30°C, and their storage stability was evaluated on the basis of the adhesiveness to lens substrates of the cured films of the thus-stored compositions. Concretely, in a cross-hatch test, the number of days within which a cured film of a coating composition sustained complete adhesion of 100/100 is the criterion of the storage stability of the coating composition tested. In this, the adhesiveness on day 0 (zero) is 100/100. The cross-hatch test is as follows: A cured film formed on a substrate is cut to have 1.5 mm-wide 100 cross-cuts, and an adhesive tape (Nichiban's Cellotape ®) is firmly stuck on it. Then, the tape is rapidly peeled from it, and the number of the cross-cuts of the cured film still remaining on the substrate is counted. The coating compositions having sustained complete adhesion of 100/100 continuously for at least 7 days in the test are good (○); those having sustained it for at least 3 days but shorter than 7 days are not good (Δ); and those having sustained it for shorter than 3 days are bad (×).

The scratch resistance of cured films of coating compositions is evaluated in a scratch test with steel wool. In the test, the coating compositions having maintained the initial hardness of their cured films for at least 7 days are good (○○); those having maintained it for at least 3 days but shorter than 7 days are average (○); and those having maintained it for shorter than 3 days are bad (×). The test results of the coating compositions prepared hereinabove are given in Table 1.

**[Table 1]**

| | Adhesiveness | Scratch Resistance | Appearance of Coated Lens |
|---|---|---|---|
| Example 1 | ○ | ○○ | good |
| Example 2 | ○ | ○○ | good |
| Example 3 | ○ | ○○ | good |
| Example 4 | ○ | ○○ | good |
| Example 5 | ○ | ○○ | good |
| Example 6 | ○ | ○ | good |
| Comp. Ex. 1 | × | ○○ | good |
| Comp. Ex. 2 | × | ○○ | good |
| Comp. Ex. 3 | × | ○○ | good |
| Comp. Ex. 4 | × | ○○ | good |
| Comp. Ex. 5 | × | ○○ | good |
| Comp. Ex. 6 | ○ | × | poor transparency |
| Comp. Ex. 7 | × | × | good |
| Comp. Ex. 8 | ○ | ○○ | poor transparency |

As in Table 1, the cured films of Examples 1 to 6 all sustained complete adhesion of 100/100 continuously for at least 7 days, and this confirms the improved storage stability of the coating compositions. As opposed to these, however, the adhesiveness of the cured films of Comparative Examples 1 and 3 to 5 lowered before 7 days, and this will be because the storage stability of the coating compositions lowered while they were stored at 30°C. The adhesion stability of the cured film of Comparative Example 2 was good, but the cured film was cracked since the step of keeping the coating composition at 20°C was omitted. The film cracks greatly detract from the appearance of the coated lenses. The storage stability of the coating compositions of Comparative Examples 6 and 8 was good, but the cured films of the compositions were poor in transparency; and the storage stability of the coating composition of Comparative Example 7 was not improved.

### [Advantages of the Invention]

Produced according to the method of the invention, the coating composition for lenses for spectacles has excellent storage stability, and the cured film of the composition has excellent adhesiveness to plastic lens substrates. The method of the invention saves production costs and increases productivity. The storage stability added to the composition has no negative influence on the physical properties of the cured film of the composition.

## Claims

1. A method for producing a coating composition for lenses for spectacles, which comprises adding (C) an acetylacetonate metal salt and (D) an aliphatic amine to a liquid mixture that contains (A) metal oxide colloid particles and (B) an organosilicon compound after the mixture has been hydrolyzed.

2. Method as claimed in claim 1, wherein the organosilicon compound (B) is at least one selected from compounds of the general formula (I):
(R¹)ₐ(R³)_{b}Si(OR²)_{4-(a+b)} (I)
wherein R¹ and R³ each independently represent a monovalent hydrocarbon group having from 1 to 10 carbon atoms and having or not having a functional group; R² represents an alkyl group having from 1 to 8 carbon atoms, an aryl group having from 6 to 10 carbon atoms, an aralkyl group having from 7 to 10 carbon atoms, or an acyl group having from 1 to 8 carbon atoms; a and b each indicate 0 or 1; and (OR²)'s may be the same or different; and compounds of the general formula (II): 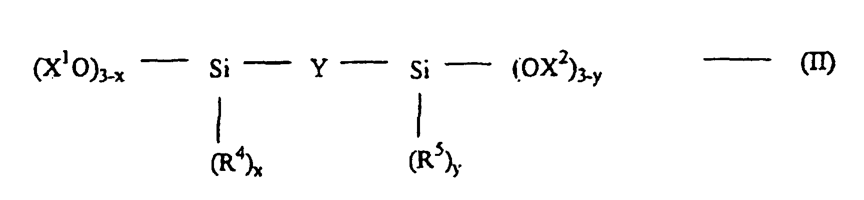 wherein R⁴ and R⁵ each independently represent a monovalent hydrocarbon group having from 1 to 5 carbon atoms and having or not having a functional group; X¹ and X² each independently represent an alkyl group having from 1 to 4 carbon atoms, or an acyl group having from 1 to 4 carbon atoms; Y represents a divalent hydrocarbon group having from 1 to 20 carbon atoms; x and y each indicate 0 or 1; X¹'s may be the same or different; and X²'s may be the same or different.

3. Method as claimed in claim 1 or 2, wherein the amount of the metal oxide colloid particles (A) to be used falls between 1 and 500 parts by weight and that of the component (D) falls between 0.001 and 10 parts by weight, relative to 100 parts by weight of the organosilicon compound (B).

4. Method as claimed in any of claims 1 to 3, wherein the metal oxide colloid particles (A) are fine particles of at least one selected from aluminum oxide, iron oxide, tin oxide, zirconium oxide, silicon oxide, titanium oxide, tungsten oxide, antimony oxide and their composite oxides.

5. A coating composition for lenses for spectacles, which is obtained in the production method of any of claims 1 to 4.

6. A method for producing lenses for spectacles, which comprises applying the coating composition of claim 5 onto the surface of a plastic lens substrate, followed by curing it.

7. A lens for spectacles, which is obtained in the production method of claim 6.

## Patentansprüche

1. Verfahren zum Herstellen einer Beschichtungszusammensetzung für Brillengläser, das Zusetzen von (C) einem Acetylacetonatmetallsalz und (D) einem aliphatischen Amin zu einem flüssigen Gemisch, das (A) Metalloxidkolloidteilchen und (B) eine Organosiliziumverbindung enthält, nachdem das Gemisch hydrolysiert wurde, umfasst.

2. Verfahren nach Anspruch 1, wobei die Organosiliziumverbindung (B) mindestens eine, ausgewählt aus Verbindungen der allgemeinen Formel (I), ist: (R¹)ₐ(R³)_{b}Si(OR²)_{4-(a+b)} (I), worin R¹ und R³ jeweils unabhängig eine einwertige Kohlenwasserstoffgruppe mit 1 bis 10 Kohlenstoffatomen und mit oder ohne eine funktionelle Gruppe wiedergeben; R² eine Alkylgruppe mit 1 bis 8 Kohlenstoffatomen, eine Arylgruppe mit 6 bis 10 Kohlenstoffatomen, eine Aralkylgruppe mit 7 bis 10 Kohlenstoffatomen, oder eine Acylgruppe mit 1 bis 8 Kohlenstoffatomen wiedergibt; a und b jeweils 0 oder 1 anzeigen; und die Reste (OR²) gleich oder verschieden sein können; und Verbindungen der allgemeinen Formel (II): 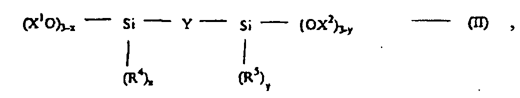 worin R⁴ und R⁵ jeweils unabhängig eine einwertige Kohlenwasserstoffgruppe mit 1 bis 5 Kohlenstoffatomen und mit oder ohne eine funktionelle Gruppe wiedergeben; X¹ und X² jeweils unabhängig eine Alkylgruppe mit 1 bis 4 Kohlenstoffatomen oder eine Acylgruppe mit 1 bis 4 Kohlenstoffatomen wiedergeben; Y eine zweiwertige Kohlenwasserstoffgruppe mit 1 bis 20 Kohlenstoffatomen wiedergibt; x und y jeweils 0 oder 1 aufweisen; die Reste X¹ gleich oder verschieden sein können und die Reste X² gleich oder verschieden sein können.

3. Verfahren nach Anspruch 1 oder 2, wobei die Menge der anzuwendenden Metalloxidkolloidteilchen (A) zwischen 1 und 500 Gewichtsteile fällt und jene der Komponente (D) zwischen 0,001 und 10 Gewichtsteile, bezogen auf 100 Gewichtsteile der Organosiliziumverbindung (B), fällt.

4. Verfahren nach einem der Ansprüche 1 bis 3, wobei die Metalloxidkolloidteilchen (A) feine Teilchen von mindestens einem, ausgewählt aus Aluminiumoxid, Eisenoxid, Zinnoxid, Zirkoniumoxid, Siliziumoxid, Titanoxid, Wolframoxid, Antimonoxid und deren Verbundoxiden, sind.

5. Beschichtungszusammensetzung für Brillengläser, die in dem Herstellungsverfahren nach einem der Ansprüche 1 bis 4 erhalten wird.

6. Verfahren zum Herstellen von Brillengläsern, das Auftragen der Beschichtungszusammensetzung von Anspruch 5 auf die Oberfläche eines Kunststoffgläsersubstrats, gefolgt von Härten derselben, umfasst.

7. Brillenglas, das in dem Herstellungsverfahren von Anspruch 6 erhalten wird.

## Revendications

1. Procédé de production d'une composition de revêtement pour verres de lunettes, qui comprend l'addition (C) d'un sel acétylacétonate métallique et (D) d'une amine aliphatique à un mélange liquide qui contient (A) des particules colloïdales d'un oxyde métallique et (B) un composé organique du silicium, après que le mélange a été hydrolysé.

2. Procédé selon la revendication 1, dans lequel le composé organique du silicium (B) est au moins un composé organique du silicium choisi parmi les composés de formule générale (I) :
(R¹)ₐ(R³)_{b}Si(OR²)_{4-(a+b)} (I)
dans laquelle R¹ et R³ représentent chacun indépendamment de l'autre un groupe hydrocarboné monovalent ayant de 1 à 10 atomes de carbone et ayant ou n'ayant pas de groupe fonctionnel ; R² représente un groupe alkyle ayant de 1 à 8 atomes de carbone, un groupe aryle ayant de 6 à 10 atomes de carbone, un groupe aralkyle ayant de 7 à 10 atomes de carbone ou un groupe acyle ayant de 1 à 8 atomes de carbone ; a et b valent chacun 0 ou 1 ; et les radicaux (OR²) peuvent être identiques ou différents ;
et les composés de formule générale (II) : 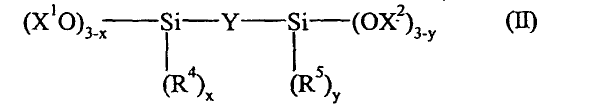 dans laquelle
R⁴ et R⁵ représentent chacun indépendamment de l'autre un groupe hydrocarboné monovalent ayant de 1 à 5 atomes de carbone et ayant ou n'ayant pas de groupe fonctionnel ; X¹ et X² représentent chacun indépendamment de l'autre un groupe alkyle ayant de 1 à 4 atomes de carbone, ou un groupe acyle ayant de 1 à 4 atomes de carbone ; Y représente un groupe hydrocarboné divalent ayant de 1 à 20 atomes de carbone ; X et Y valent chacun 0 ou 1 ; les radicaux X¹ peuvent être identiques ou différents, et les radicaux X² peuvent être identiques ou différents.

3. Procédé selon la revendication 1 ou 2, dans lequel la quantité des particules colloïdales d'oxydes métalliques (A) devant être utilisée tombe entre 1 et 500 parties en poids, et celle du composant (D) tombe entre 0,001 et 10 parties en poids, pour 100 parties en poids du composé organique du silicium (B).

4. Procédé selon l'une quelconque des revendications 1 à 3, dans lequel les particules colloïdales d'oxyde métallique (A) sont des particules fines d'au moins un oxyde choisi parmi l'oxyde d'aluminium, l'oxyde de fer, l'oxyde d'étain, l'oxyde de zirconium, l'oxyde de silicium, l'oxyde de titane, l'oxyde de tungstène, l'oxyde d'antimoine et leurs oxydes composites.

5. Composition de revêtement pour verres de lunettes, qui est obtenue par le procédé de production selon l'une quelconque des revendications 1 à 4.

6. Procédé de production de verres de lunettes, qui comprend l'application de la composition de revêtement de la revendication 5 sur la surface d'un substrat plastique pour verre de lunettes, l'application étant suivie d'un durcissement.

7. Verre de lunettes, qui est obtenu par le procédé de production de la revendication 6.
